# EUROPÄISCHE PATENTSCHRIFT

(11) **EP 1 193 011 B1**
(45) Veröffentlichungstag und Bekanntmachung des Hinweises auf die Patenterteilung: **26.11.2003**
(21) Anmeldenummer: 01121521.7
(22) Anmeldetag: 08.09.2001
(51) Int. Cl.: B23B 31/00, B23B 31/11

(54) **Werkzeugkupplung**
Tool coupling
Raccordement d'outil

(30) Priorität: 02.10.2000 DE 10048910
(43) Veröffentlichungstag der Anmeldung: 03.04.2002
(73) Patentinhaber: MAPAL Fabrik für Präzisionswerkzeuge Dr. Kress KG, D-73431 Aalen (DE)
(72) Erfinder: Kress, Dieter Dr., 73431 Aalen (DE); Häberle, Friedrich, 73466 Lauchheim (DE)
(74) Vertreter: Gleiss, Alf-Olav, Dr.jur. Dipl.-Ing.

(56) Entgegenhaltungen:
- DE-A- 2 454 146
- DE-A- 3 136 147
- DE-A- 3 532 891
- US-A- 4 621 960

## Beschreibung

Die Erfindung betrifft eine Verbindungsstelle zwischen zwei Werkzeugteilen gemäß Oberbegriff des Anspruchs 1.

Verbindungsstellen der hier angesprochenen Art sind bekannt (DE-A-3532891). Sie dienen dazu, zwei Werkzeugteile miteinander zu verbinden, beispielsweise einen Werkzeugkopf mit einem Halter, der unmittelbar Teil einer Werkzeugmaschine sein kann oder seinerseits in eine Werkzeugmaschine eingebracht und dort befestigt wird. Eine derartige Verbindungsstelle wird im Zusammenhang mit Werkzeugen verwendet, die zur spanenden Bearbeitung von in der Regel metallischen Werkstücken eingesetzt werden. Zur Erhöhung der Schnittgeschwindigkeiten und der Standzeit des Werkzeugs werden Kühl- und/oder Schmiermittel eingesetzt. Diese werden mittels einer geeigneten Vorrichtung in den Bearbeitungsbereich geleitet. Es hat sich herausgestellt, dass insbesondere beim automatischen Werkzeugwechsel aber auch bei anderen Einsatzfällen derartiger Werkzeuge die externe Versorgung mit einem Kühl- und/oder Schmiermittel aufwendig ist und häufig dazu führt, dass ein automatischer Werkzeugwechsel nicht möglich ist.

Aufgabe der Erfindung ist es daher, eine Verbindungsstelle der eingangs genannten Art zu schafften, die diesen Nachteil vermeidet.

Zur Lösung dieser Aufgabe wird eine Verbindungsstelle vorgeschlagen, die die in Anspruch 1 genannten Merkmale aufweist. Sie weist ein erstes Werkzeugteil mit einer Ausnehmung und ein zweites Werkzeugteil mit einem Vorsprung auf. Es ist vorgesehen, dass der Kegelwinkel der hohlkegelförmigen Ausnehmung und der des kegelförmigen Vorsprungs nahezu exakt gleich sind, so dass eine sehr genaue Positionierung der beiden Werkzeugteile zueinander möglich ist. Außerdem ist vorgesehen, dass der Vorsprung praktisch unnachgiebig und die die Ausnehmung umgebende Wandung des ersten Werkzeugteils nachgiebig ausgebildet sind. Die beiden Werkzeugteile sind mit Planflächen versehen, die bei deren Verbindung aneinander liegen. Solange die beiden Werkzeugteile noch nicht verspannt sind, liegen auch bei in die Ausnehmung eingestecktem Vorsprung die Planflächen in einem Abstand zueinander. Erst durch Aktivierung der Spannvorrichtung werden die beiden Werkzeugteile so miteinander verspannt, dass die Planflächen aneinanderliegen. Durch die axiale Verlagerung der beiden Werkzeugteile während des Verspannens wird die Wandung des ersten Werkzeugteils aufgeweitet, so dass einerseits die Außenfläche des Vorsprungs an der Innenfläche der Ausnehmung anliegt und andererseits die beiden Planflächen. Dadurch ergibt sich eine mechanische Überbestimmung. Der Vorsprung des zweiten Werkzeugteils kann relativ klein ausgebildet werden, so dass insgesamt eine sehr kompakte Verbindungsstelle realisierbar ist.

Die Verbindungsstelle zeichnet sich durch mindestens einen Kühl- und/oder Schmiermittelkanal aus, der durch das erste Werkzeugteil und durch das zweite Werkzeugteil verläuft und die Planflächen der beiden Werkzeugteile schneidet. Es ist damit möglich, durch die beiden Werkzeugteile und über die Verbindungsstelle hinweg ein Kühl- und/oder Schmiermittel zum Bearbeitungsbereich zu leiten und damit auf externe, separate Vorrichtungen für eine Kühl- und/oder Schmiermittelversorgung zu verzichten. Insgesamt wird dadurch der konstruktive Aufwand für eine Werkzeugmaschine reduziert, außerdem ist es möglich, einen automatischen Werkzeugwechsel durchzuführen.

Weitere Ausgestaltungen ergeben sich aus den übrigen Unteransprüchen. Die Erfindung wird im Folgenden anhand der Zeichnung näher erläutert. Es zeigen:
- Figur 1: ein erstes Werkzeugteil einer Verbindungsstelle;
- Figur 2: das Vorderende des ersten Werkzeugteils im Längsschnitt;
- Figur 3: eine Draufsicht auf das Vorderende des ersten Werkzeugteils;
- Figur 4: eine Seitenansicht des zweiten Werkzeugteils;
- Figur 5: einen Längsschnitt durch das zweite Werkzeugteil und
- Figur 6: eine Rückansicht des zweiten Werkzeugteils.

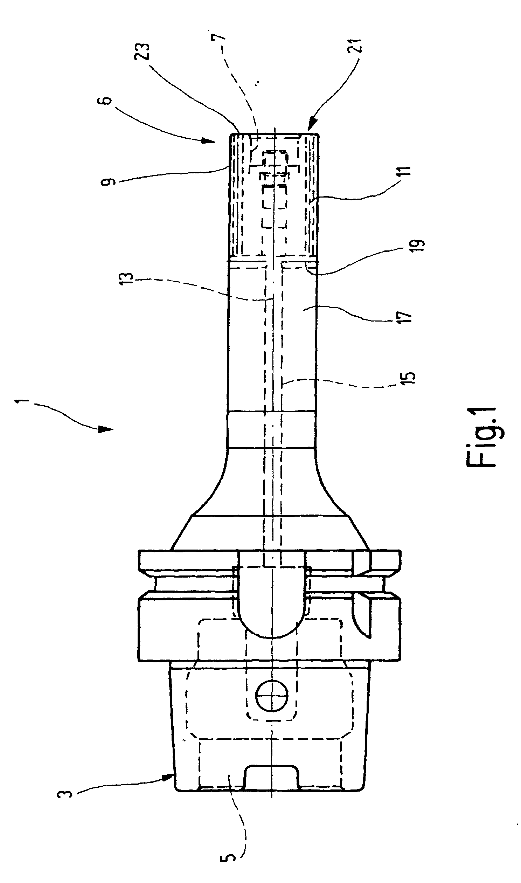

Bei dem in Figur 1 gezeigten ersten Werkzeugteil handelt es sich um einen Halter 1, der an seinem einen Ende, in Figur 1 links, mit einem herkömmlichen Spannkegel 3 ausgebildet ist. Dieser weist einen Hohlraum 5 auf, in den eine geeignete, hier nicht dargestellte Spanneinrichtung eingreift, um den Spannkegel 3 aufzuweiten und in einer Werkzeugaufnahme fest einzuspannen.

An seinem gegenüberliegenden Vorderende 6, in Figur 1 rechts, ist der Halter 1 mit einer hier nur angedeuteten Ausnehmung 7 versehen, in den das hier nicht dargestellte zweite Werkzeugteil zur Vervollständigung der Verbindungsstelle einsteckbar ist.

In die die Ausnehmung 7 umgebende Wandung 9 des Halters 1 ist mindestens ein Kühl- und/oder Schmiermittelkanal eingebracht. Der hier dargestellte Halter 1 ist mit vier derartigen Kühlund/oder Schmiermittelkanälen versehen, die in einem gleichen Abstand zueinander angeordnet sind und parallel zur Mittelachse 13 des Halters 1 verlaufen. Konzentrisch zu dieser verläuft ein Zufuhrkanal 15 durch den Grundkörper 17 des Halters 1. Der Zufuhrkanal 15 mündet in dem Hohlraum 5. Der Zufuhrkanal 15 ist über Verteilerkanäle 19, die radial zur Mittelachse 13 verlaufen können, mit den Kühl- und/oder Schmiermittelkanälen 11 verbunden, so dass Kühl- und/oder Schmiermittel von einer Werkzeugspindel, an der der Halter 1 befestigt ist, über den Zufuhrkanal 15, die Verteilerkanäle 19 und durch die Kühl- und/oder Schmiermittelkanäle 11 an das zweite Werkzeugteil herangeführt werden kann.

An der dem Spannkegel 3 gegenüberliegenden Stirnseite 21 ist eine erste Planfläche 23 vorgesehen, die die Öffnung der Ausnehmung 7 in der Stirnseite 21 umgibt und vorzugsweise ringförmig ausgebildet ist.

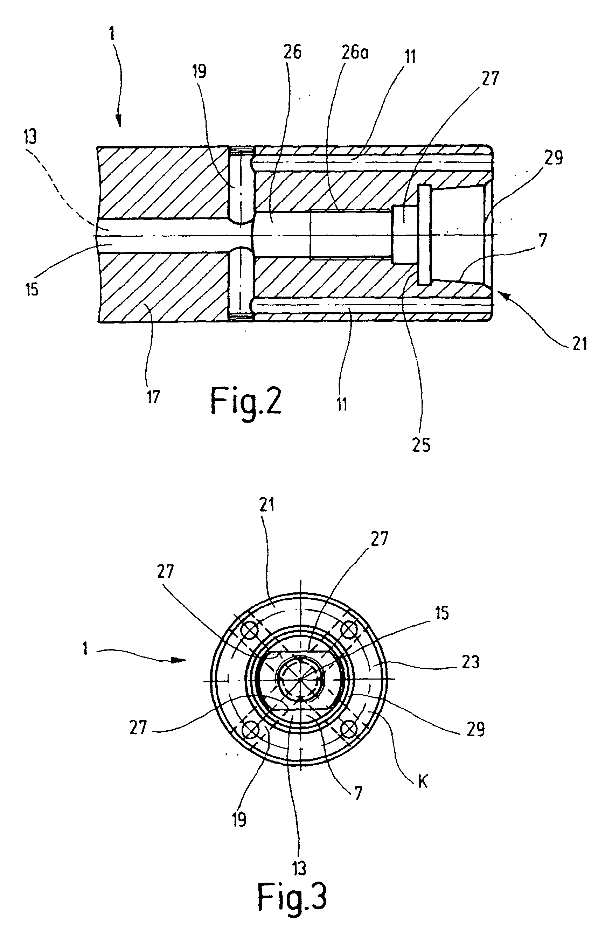

Figur 2 zeigt das dem Spannkegel 3 gegenüberliegende Vorderende 6 des Halters 1 in einer vergrößerten Schnittdarstellung. Gleiche Teile sind mit gleichen Bezugsziffern versehen, so dass auf deren ausführliche Beschreibung hier verzichtet und insofern auf die Beschreibung zu Figur 1 verwiesen wird.

Aus der Vergrößerung ist die Ausnehmung 7 deutlich erkennbar, die die Stirnseite 21 des Halters 1 durchbricht und hohlkegelförmig ausgebildet ist. Sie verjüngt sich ausgehend von der Stirnseite 21 nach links. In die Grundfläche 25 der Ausnehmung 7 ist mindestens eine Mitnehmerfläche 27 eingebracht, die vorzugsweise in einem sogenannten Erosionsverfahren herstellbar ist. Bei dem hier dargestellten Ausführungsbeispiel des Halters 1 sind zwei einander gegenüberliegende Mitnehmerflächen vorgesehen, die parallel zueinander in einem Abstand zur Mittelachse 13 angeordnet sind.

In die Grundfläche 25 der Ausnehmung 7 mündet eine vorzugsweise als Bohrung realisierte Ausnehmung 26, die konzentrisch zur Mittelachse 13 verläuft und mit einem Innengewinde 26a versehen ist.

Aus der Vergrößerung ist noch einmal deutlich erkennbar, dass der Zufuhrkanal 15 über die Verteilerkanäle 19 mit den Kühl- und/oder Schmiermittelkanälen 11 verbunden ist, die die Stirnseite 21 des Halters 1 durchbrechen, hier in der ersten Planfläche 23 münden.

Figur 2 zeigt noch, dass die Ausnehmung 7 mit einer Phase 29 versehen ist, die der Erleichterung der Einführung eines Vorsprungs des zweiten Werkzeugteils dient.

Aus der in Figur 3 wiedergegebenen Draufsicht auf die Stirnseite 21 des Halters 1 ist ersichtlich, dass in die erste Planfläche 23 vier Kühl- und/oder Schmiermittelkanäle 11 münden, die in einem gleichen Abstand zueinander auf einer gedachten Kreislinie K angeordnet und über vier Verteilerkanäle 19 mit dem zentralen Zufuhrkanal 15 verbunden sind.

Die Draufsicht zeigt auch die beiden einander gegenüberliegenden Mitnehmerflächen 27, die in einem Abstand parallel zueinander und zur Mittelachse 13 angeordnet sind.

Bei den Erläuterungen zu den Figuren 1 bis 3 wurde davon ausgegangen, dass der Halter 1 seinerseits an einer Werkzeugmaschine befestigbar ist und zwar über den Spannkegel 3. Es ist jedoch auch möglich, dass der Halter 1 selbst Teil einer Werkzeugmaschine ist, dass also auf dem Spannkegel 3 verzichtet wird.

Aus der Darstellung gemäß Figur 1 wird deutlich, dass der Außendurchmesser des Spannkegels 3 wesentlich größer ist als der Innendurchmesser der Ausnehmung 7 im Halter 1. Die Verbindungsstelle zwischen dem ersten Werkzeugteil, das heißt dem Halter 1, und dem hier nicht dargestellten zweiten Werkzeugteil ist also wesentlich kleiner als die übliche durch den Spannkegel 3 realisierte Befestigungsstelle für den Halter 1 an einer Werkzeugmaschine.

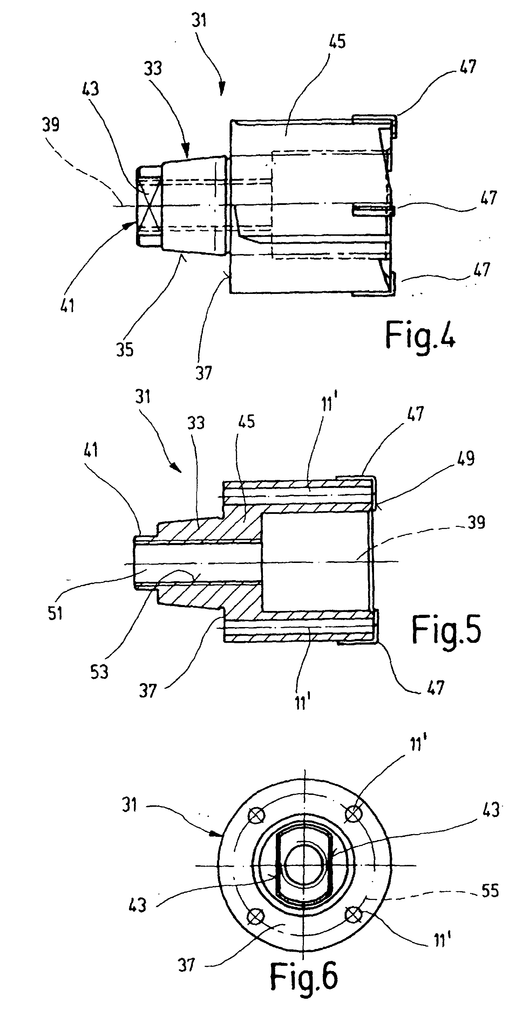

Figur 4 zeigt das zweite Werkzeugteil, das in das erste Werkzeugteil, also in den Halter 1, zur Vervollständigung der Verbindungsstelle einsteckbar ist. Bei dem in Figur 4 dargestellten Ausführungsbeispiel handelt es sich bei dem zweiten Werkzeugteil um einen Werkzeugkopf 31. Es ist jedoch auch denkbar, dass das zweite Werkzeugteil als Zwischenstück, Verlängerungselement oder Adapter oder dergleichen ausgebildet ist. Wesentlich ist, dass das zweite Werkzeugteil, hier also der Werkzeugkopf 31, mit einem Vorsprung 33 versehen ist, der eine kegelförmige Umfangsfläche 35 aufweist und so ausgelegt ist, dass er in die Ausnehmung 7 eingesteckt werden kann.

Wesentlich ist außerdem, dass die Ausnehmung 7 und der Vorsprung 33 praktisch den identischen Kegelwinkel aufweisen. Die Länge des Vorsprungs 33 ist so auf die Tiefe der Ausnehmung 7 abgestimmt, dass eine zweite Planfläche 37, die den Vorsprung 33 umgibt und senkrecht zur Mittelachse 39 des Werkzeugkopfes 31 verläuft, fest an der ersten Planfläche 23 des Halters 1 anliegt, wenn die beiden Werkzeugteile zur Realisierung der Verbindungsstelle fest ineinandergefügt sind.

Der Vorsprung 33 ist mit einem Fortsatz 41 versehen, der mindestens eine Anlagefläche 43 aufweist. Der Fortsatz 41 ist grundsätzlich im wesentlichen zylindrisch ausgebildet. Bei dem hier dargestellten Ausführungsbeispiel sind zwei einander gegenüberliegende, parallel zueinander verlaufende Anlageflächen 43 vorgesehen, die im zusammengebauten Zustand der Verbindungsstelle an den Mitnehmerflächen 27 anliegen.

Das in Figur 4 dargestellte zweite Werkzeugteil ist als spanabtragender Werkzeugkopf 31 mit mehreren in den Grundkörper 45 des zweiten Werkzeugteils eingelassenen Schneidplatten 47 ausgebildet, jedoch ist die spezielle Ausgestaltung des Werkzeugkopfes 31 und die Anzahl der Schneidplatten 47 für die Realisierung der Verbindungsstelle nicht relevant.

In Figur 5 ist das zweite Werkzeugteil, also der in Figur 4 dargestellte Werkzeugkopf 31 im Längsschnitt dargestellt. Gleiche Teile sind mit gleichen Bezugsziffern versehen, so dass auf die Beschreibung zu Figur 4 verwiesen wird.

Die Schnittdarstellung zeigt, dass der zweiten Planfläche 37 eine Stirnfläche 49 gegenüberliegt, in die mindestens ein, hier vier Kühl- und/oder Schmiermittelkanäle 11' münden, die parallel zur Mittelachse 39 des zweiten Werkzeugteils verlaufen und auch in der zweiten Planfläche 37 münden.

In den Grundkörper 45 des als Werkzeugkopf 31 ausgebildeten zweiten Werkzeugteils ist eine vorzugsweise als Bohrung realisierte Ausnehmung 51 eingebracht, die mit einem Innengewinde 53 versehen ist.

Aus Figur 5 ist ersichtlich, dass die Ausnehmung 51 durch die Stirnfläche 49 hindurch zugänglich ist, weil der Werkzeugkopf 31 beispielhaft hohl ausgebildet ist. Für die Zugänglichkeit wäre es jedoch ausreichend, wenn sich die Ausnehmung 51 durchgehend bis zur Stirnfläche 49 erstreckte und dort mündete.

Aus der in Figur 6 wiedergegebenen Rückansicht auf die zweite Planfläche 37 des hier als Werkzeugkopf 31 ausgebildeten zweiten Werkzeugteils ist ersichtlich, dass vier in gleichem Abstand zueinander angeordnete Kühl- und/oder Schmiermittelkanäle 11' vorgesehen sind, die auf einer gedachten Kreislinie 55 angeordnet sind. Der Durchmesser der Kreislinie 55 entspricht dem der in Figur 3 dargestellten Kreislinie K, auf der die Mittelpunkte der dort wiedergegebenen Kühl- und/oder Schmiermittelkanäle 11 liegen. Der Abstand der Kühl- und/oder Schmiermittelkanäle 11 und der Kühl- und/oder Schmiermittelkanäle 11' ist identisch, so dass bei zusammengebauter Verbindungsstelle die Kühl- und/oder Schmiermittelkanäle der beiden Werkzeugteile 1 und 31 miteinander fluchten und das Kühl- und/oder Schmiermittel an der Stirnfläche 49 des als Werkzeugkopf 31 ausgebildeten zweiten Werkzeugteils austreten kann. Sollte das zweite Werkzeugteil als Zwischenstück oder dergleichen ausgebildet sein, so sind die Kühl- und/oder Schmiermittelkanäle 11' so anzuordnen, dass diese mit weiteren Kanälen fluchten, die dann mit dem zweiten Werkzeugteil gekoppelt werden.

Bei dem als Halter 1 ausgebildeten ersten Werkzeugteil sind die Mitnehmerflächen 27 und die Kühlund/oder Schmiermittelkanäle 11 in einer definierten Positionierung zueinander angeordnet. Dies gilt auch entsprechend für die Anlageflächen 43 und die Kühl- und/oder Schmiermittelkanäle 11' des als Werkzeugkopf 31 ausgebildeten zweiten Werkzeugteils. Wenn also zur Realisierung der Verbindungsstelle der Vorsprung 33 des Werkzeugkopfs 31 in die Ausnehmung 7 des Halters 1 eingesteckt ist, so liegen die Mitnehmerflächen 27 und die Anlageflächen 43 aneinander an und gewährleisten damit eine exakte Positionierung der Werkzeugteile zueinander, so dass sichergestellt ist, dass die Kühl- und/oder Schmiermittelkanäle 11 im Halter 1 mit den Kühlund/oder Schmiermittelkanälen 11' im Werkzeugkopf 31 fluchten. Zusätzlich dienen die Mitnehmer- und Anlageflächen 27, 43 als Verdrehsicherung der beiden Werkzeugteile und damit der Verbindungsstelle.

Beim Zusammenbau der Verbindungsstelle, also beim Zusammenfügen der beiden Werkzeugteile, wird zunächst der Vorsprung 33 in die Ausnehmung 7 eingesteckt. Die Dimensionierung des Vorsprungs 33 ist so gewählt, dass nach dem Einstecken des Vorsprungs in die Ausnehmung zwischen den Planflächen 23 und 37 ein kleiner Abstand gegeben ist, der beispielsweise im Bereich von 2/100 mm liegt.

Um eine sichere Fixierung der beiden Werkzeugteile 1 und 31 im Bereich der Verbindungsstelle zu gewährleisten, ist eine Spannvorrichtung vorgesehen, die eine Spannschraube umfasst. Diese wird mit dem Innengewinde 26a im Halter 1 und mit dem Innengewinde 53 im Werkzeugkopf 31 in Eingriff gebracht und festgezogen. Beim Festziehen der Spannschraube erfolgt eine axiale Relativbewegung der beiden Werkzeugteile zueinander, wobei der praktisch unnachgiebige Vorsprung 33 die Ausnehmung 7 beziehungsweise die die Ausnehmung 7 umgebende Wandung 9 des ersten Werkzeugteils aufweitet. Die axiale Verlagerung der beiden Werkzeugteile zueinander führt dazu, dass schließlich die Planflächen 23 und 37 fest aneinander anliegen. Gleichzeitig liegt auch die Außenseite des Vorsprungs 33 fest an der Innenfläche der Ausnehmung 7 an, so dass sich hier eine mechanische Überbestimmung ergibt, was zu einer überaus stabilen Verspannung der Werkzeugteile und damit Verbindungsstelle führt. Außerdem ergibt sich eine hohe Wiederholungsgenauigkeit.

Der Kegelwinkel der Ausnehmung 7 und der des Vorsprungs 33 sind, wie gesagt, praktisch identisch. Vorzugsweise wird ein Kegelwinkel gewählt der eine Selbsthemmung der ineinander gesteckten Werkzeugteile ergibt. Der Kegelwinkel liegt also etwa im Bereich von 5° beziehungsweise darunter.

Vorzugsweise wird eine Spannschraube eingesetzt, die zwei entgegengesetzt orientierte Gewindebereiche, nämlich ein Rechts- und ein Linksgewinde aufweist und die als Differentialschraube ausgebildet ist. Wird diese Spannschraube in eine erste Richtung gedreht, so werden die beiden Werkzeugteile 1 und 31 fest miteinander verspannt. Wird die Spannschraube in die entgegengesetzte Richtung gedreht, wird die Verspannung der Werkzeugteile im Bereich der Verbindungsstelle gelöst und der Vorsprung 33 aus der Ausnehmung 7 herausgedrückt. Da der Kegelwinkel der Ausnehmung 7 und der des Vorsprungs 33 in einem Bereich der Selbsthemmung liegt, ergibt sich ein entscheidender Vorteil dadurch, dass die Spannschraube zwei entgegengesetzte Gewindebereiche aufweist, so dass bei einer Drehbewegung der Spannschraube in Lösungsrichtung die beiden Werkzeugteile auseinandergedrückt werden, wobei die Selbsthemmung überwunden wird.

Die Spannschraube kann durch eine Öffnung in der Stirnfläche 49 des ersten Werkzeugteils und/oder durch den Hohlraum 5 und den Zufuhrkanal 15 im zweiten Werkzeugteil zugänglich sein.

Beim Festziehen der Spannschraube, die in den Figuren 1 bis 6 nicht dargestellt ist, werden die erste Planfläche 23 im ersten Werkzeugteil und die zweite Planfläche 37 im zweiten Werkzeugteil fest aneinandergedrückt, so dass sich ein sicherer Verbund der Werkzeugteile im Bereich der Verbindungsstelle ergibt. Die erste Planfläche 23 am Halter 1 ist ebenso wie die zweite Planfläche 37 am Werkzeugkopf 31 exakt positionierbar. Insbesondere ist es möglich, die zweite Planfläche 37 gegenüber dem Vorsprung 33 sehr genau auszurichten. Dadurch ergibt sich eine sehr exakte Verbindung der Werkzeugteile im Bereich der Verbindungsstelle und eine sehr hohe Wiederholungsgenauigkeit beim Lösen und Wiederverbinden der beiden Werkzeugteile im Bereich der Verbindungsstelle.

Der Vorsprung 33 ist trotz seiner geringen Abmessungen sehr stabil ausgebildet und praktisch nicht verformbar, zumindest nicht in radialer Richtung. Demgegenüber ist die Wandung 9 des Halters 1, die die Ausnehmung 7 umgibt, etwas nachgiebig, so dass der Vorsprung 33 fest in der Ausnehmung 7 verspannt wird, wenn die Schraube angezogen wird. Der größte Außendurchmesser des Vorsprungs 33 ist hier etwa 1 bis 6 µm, vorzugsweise 1,5 bis 4 µm, insbesondere 2 bis 3 µm größer als der größte Innendurchmesser der Ausnehmung 7.

Es zeigt sich ohne weiteres, dass der Vorsprung 33 des hier als Werkzeugkopf 31 ausgebildeten zweiten Werkzeugteils relativ klein sein kann und dass dennoch eine sehr stabile Verbindung zwischen den Werkzeugteilen realisierbar ist, wobei die angesprochene exakte Ausrichtung der Teile zueinander gewährleistet werden kann. Die genaue Ausrichtung der Werkzeugteile zueinander ist insbesondere dadurch erreichbar, dass die beiden Planflächen 23 und 37 umlaufend und vorzugsweise als Ringflächen ausgebildet sind, so dass sich rund um den Verbindungsbereich der beiden Werkzeugteile eine exakte Anlage und Ausrichtung der Teile ergibt.

Aus den Erläuterungen zu der in den Figuren 1 bis 6 dargestellten Verbindungsstelle wird deutlich, dass innerhalb eines Werkzeugsystems mehrere Verbindungsstellen der hier beschriebenen Art hintereinander realisierbar sind und dass dabei bei einer sehr kleinen Bauform eine äußerst exakte Positionierung der Werkzeugteile zueinander realisierbar ist. Überdies können trotz der kleinen Bauform hohe Kräfte über die Verbindungsstelle beziehungsweise über die mehreren Verbindungsstellen übertragen werden. Schließlich sei noch darauf hingewiesen, dass sich die Vorteile der Verbindungsstelle auch dann einstellen, wenn das erste Werkzeugteil mit dem Vorsprung und das zweite Werkzeugteil mit der Ausnehmung versehen sind, die Verbindungsstelle also quasi spiegelbildlich ausgebildet ist.

## Patentansprüche

1. Verbindungsstelle zwischen zwei Werkzeugteilen, von denen ein erstes Werkzeugteil eine hohlkegelförmige Ausnehmung und ein zweites Werkzeugteil einen kegelförmigen Vorsprung aufweist, der in die Ausnehmung einsteckbar ist, wobei die Ausnehmung (7) und der Vorsprung (33) praktisch den identischen Kegelwinkel aufweisen, der Vorsprung (33) praktisch unnachgiebig und die die Ausnehmung (7) umgebende Wandung (9) des ersten Werkzeugteils (Halter (1)) nachgiebig ausgebildet sind, die beiden Werkzeugteile (1, 31) mit Planflächen (23, 37) versehen sind, die bei Verbindung der beiden Werkzeugteile (1, 31) aneinander liegen, die beiden Werkzeugteile im zusammengebauten Zustand der Verbindungsstelle in axialer Richtung mittels einer Spannvorrichtung so miteinander verspannt sind, dass die Wandung (9) des ersten Werkzeugteils (1) aufgeweitet ist, **dadurch gekennzeichnet, dass** mindestens ein Kühl- und/oder Schmiermittelkanal (11, 11') durch das erste Werkzeugteil (1) und durch das zweite Werkzeugteil (31) verläuft und die Planflächen (23, 37) schneidet.

2. Verbindungsstelle nach Anspruch 1, **dadurch gekennzeichnet, dass** der Kegelwinkel der beiden Werkzeugteile (1, 31) etwa ≤ 5° beträgt.

3. Verbindungsstelle nach Anspruch 1 oder 2, **dadurch gekennzeichnet, dass** die Planflächen (23, 37) als Ringflächen ausgebildet sind.

4. Verbindungsstelle nach einem der vorhergehenden Ansprüche, **dadurch gekennzeichnet, dass** die Spannvorrichtung mindestens eine Spannschraube umfasst, die die beiden Werkzeugteile (1, 31) durchgreift.

5. Verbindungsstelle nach Anspruch 4, **dadurch gekennzeichnet, dass** die mindestens eine Spannschraube ein Rechts-/Linksgewinde aufweist.

## Claims

1. Tool coupling between two tool components, of which a first tool component incorporates a hollow conically shaped indentation, and of which a second tool component incorporates a conically shaped projection which is received into the said indentation, whereby the indentation (7) and the projection (33) practically provide an identical conical angle, and whereby the projection (33) is practically non-yielding, and whereby the wall area (9) that surrounds the indentation (7) of the first tool component (holder (1)) takes on a yielding form, and whereby both tool components (1, 31) are equipped with flat surfaces (23, 37) which lie adjacent to one another when the two tool components (1, 31) are connected, whereby the two tool components are interlocked with one another via the connection point in their connected position in an axial direction in such a way that the wall area (9) of the first tool component (1) is widened, **characterised in that** at least one cooling and/or lubricating material channel (11, 11') is formed through the first tool component (1) and through second tool component (31) and **in that** the same intersects the said flat surfaces (23, 37).

2. Tool coupling according to claim 1, **characterised in that** the conical angle of the two tool components (1, 31) is approximately ≤ 5°.

3. Tool coupling according to claim 1 or 2, **characterised in that** the flat surfaces (23, 37) take the form of circular ring surfaces.

4. Tool coupling according to one of the preceding claims, **characterised in that** the tensioning mechanism incorporates at least one set screw which engages through both tool components (1, 31).

5. Tool coupling according to claim 4, **characterised in that** at least one set screw incorporates a left-/right-handed thread.

## Revendications

1. Raccordement entre deux éléments d'outil, dont un premier élément d'outil présente un évidement en forme d'un cône creux et un deuxième élément d'outil présente une saillie en forme de cône, qui peut être introduite dans l'évidement, l'évidement (7) et la saillie (33) présentant pratiquement le même angle conique, la saillie (33) étant conçue pratiquement inflexible et la paroi (9) du premier élément d'outil (support (1)) entourant l'évidement (7) étant conçue flexible, les deux éléments d'outil (1, 31) étant munis de surfaces planes (23, 37) qui sont appliquées l'une contre l'autre lors de l'assemblage des deux éléments d'outil (1, 31), les deux éléments d'outil, à l'état assemblé du raccordement, étant serrés réciproquement dans la direction axiale à l'aide d'un dispositif de serrage, de telle sorte que la paroi (9) du premier élément d'outil (1) est évasée, **caractérisé en ce qu'**au moins un canal de réfrigérant et/ou de lubrifiant (11, 11') s'étend à travers le premier élément d'outil (1) et le deuxième élément d'outil (31) et coupe les surfaces planes (23, 37).

2. Raccordement selon la revendication 1, **caractérisé en ce que** l'angle conique des deux éléments d'outil (1, 31) est environ ≤ 5°.

3. Raccordement selon la revendication 1 ou 2, **caractérisé en ce que** les surfaces planes (23, 37) présentent la forme de surfaces annulaires.

4. Raccordement selon l'une quelconque des revendications précédentes, **caractérisé en ce que** le dispositif de serrage comprend au moins une vis de serrage traversant les deux éléments d'outil (1, 31).

5. Raccordement selon la revendication 4, **caractérisé en ce que** ladite au moins une vis de serrage présente un filet à droite et un filet à gauche.
